# FASCICULE DE BREVET EUROPEEN

(11) **EP 2 507 641 B1**
(45) Date de publication et mention de la délivrance du brevet: **08.01.2014**
(21) Numéro de dépôt: 10784984.6
(22) Date de dépôt: 25.11.2010
(51) Int. Cl.: G01P 21/02

(54) **PROCEDE DE DETECTION DE PANNE D'UN CAPTEUR FREQUENTIEL ET CIRCUIT POUR LA MISE EN OEUVRE DE CE PROCEDE**
VERFAHREN ZUR ERKENNUNG DES DEFEKTS EINES FREQUENZSENSORS UND SCHALTUNG ZUR UMSETZUNG DIESES VERFAHRENS
METHOD FOR DETECTING THE FAILURE OF A FREQUENCY SENSOR, AND CIRCUIT FOR IMPLEMENTING SAID METHOD

(30) Priorité: 02.12.2009 FR 0905844
(43) Date de publication de la demande: 10.10.2012
(73) Titulaire: SAGEM Défense Sécurité, 92100 Boulogne- Billancourt (FR)
(72) Inventeur: GENESTE, Nicolas, F-75015 Paris (FR); ESTEVE, Gwénaël, F-75015 Paris (FR)
(74) Mandataire: Lavialle, Bruno François Stéphane
(86) Numéro de dépôt international: PCT/EP2010/007142
(87) Numéro de publication internationale: WO 2011/066919

(56) Documents cités:
- DE-A1- 3 906 304
- DE-A1- 4 210 797
- DE-A1- 19 636 821

## Description

La présente invention concerne un procédé de détection de panne sur un capteur fréquentiel et un circuit mettant en oeuvre ce procédé. Ce circuit est plus particulièrement destiné à être incorporé dans le dispositif de commande du moteur d'un aéronef, tel qu'un turboréacteur.

Un tel dispositif de commande comprend un calculateur qui détermine notamment le débit de carburant en fonction de la température du moteur, de la vitesse de rotation du compresseur haute pression, de la vitesse de rotation du compresseur basse pression, des pressions dans le moteur et des états des différents composants du moteur. Les vitesses de rotation du compresseur haute pression et du compresseur basse pression sont essentielles pour assurer la régulation du moteur et sont mesurées par des capteurs fréquentiels tels que des roues phoniques comportant par exemple une roue dentée solidaire de l'arbre du compresseur et entourée d'une bobine.

Dans une telle application, où une défaillance du dispositif de commande peut avoir des conséquences dramatiques pour le fonctionnement de l'aéronef, l'une des préoccupations principales est la détection des pannes et, de préférence, l'identification des composants défaillants.

Actuellement, en l'absence d'une telle identification, l'ensemble capteur et circuits associés est changé lorsqu'une défaillance est détectée. Il en résulte des coûts importants.

Il est cependant connu de détecter une absence de signal et de rapprocher cet état d'une panne. La demande DE 196 36281 A1 décrit un procédé qui est simple, performant et permet de détecter les circuits ouverts et les courts-circuits différentiels. Ce procédé ne permet en revanche pas de détecter les courts-circuits à la masse.

Cette identification pourrait en outre être réalisée au moyen de composants électroniques complexes. Or, la fiabilité des composants électroniques diminue avec la complexité tandis que leur coût augmente avec celle-ci.

Un but de l'invention est de fournir un moyen simple permettant de détecter et d'identifier des défaillances dans un capteur différentiel.

A cet effet, on prévoit, selon l'invention, un procédé de détection de panne d'un capteur fréquentiel qui est associé à un organe rotatif, comportant les étapes de, lorsque l'organe rotatif est à l'arrêt :
- injecter au moins une impulsion sur au moins une borne du capteur,
- détecter au moins une impulsion dans un signal de sortie du capteur.

Ceci permet de manière particulièrement simple de détecter des courts-circuits de ladite borne à la masse. Le ou les signaux de sortie du capteur qui est / sont détecté(s) est / sont généré(s) par le capteur en réponse à l'injection de ladite au moins une impulsion sur au moins une borne du capteur.Cette détection sera d'autant plus facilitée que le capteur fréquentiel comporte généralement une bobine présentant une inductance telle qu'il va réagir à l'impulsion en envoyant lui-même une forte impulsion dans le signal de sortie.

De préférence, le capteur comportant deux bornes, l'injection de l'impulsion et la détection sont effectuées successivement pour chacune des bornes.

Les courts-circuits à la masse sont ainsi détectés sur chaque borne du capteur fréquentiel.

Selon un mode de réalisation préféré, des impulsions sont injectées sur deux bornes du capteur sous formes de signaux alternatifs opposés comportant au moins une première alternance et une deuxième alternance, la première alternance ayant une amplitude supérieure à celle de la deuxième alternance, la détection portant sur une fréquence du signal de sortie du capteur.

La fréquence du signal en sortie du capteur est affectée par les pannes du capteur : elle prendra une valeur différente pour chaque type de panne et sera notamment nulle pour un court-circuit différentiel. Ceci résulte notamment de la présence d'alternances d'amplitudes différentes : l'alternance de forte amplitude est prise en compte dans tous les cas sauf en cas de court-circuit tandis que l'alternance de faible amplitude n'est prise en compte qu'en cas de circuit-ouvert.

L'invention a également pour objet un circuit de mesure comportant un capteur fréquentiel et une chaîne d'acquisition comportant un calculateur numérique agencé pour mettre en oeuvre le procédé conforme à l'une quelconque des revendications précédentes.

L'analyse des signaux de la chaîne d'acquisition permet ainsi de révéler des défaillances et d'identifier celles-ci grâce à la mise en oeuvre du procédé.

D'autres caractéristiques et avantages de l'invention ressortiront à la lecture de la description qui suit de modes de réalisation particuliers non limitatifs de l'invention.

Il sera fait référence aux dessins annexés, parmi lesquels :

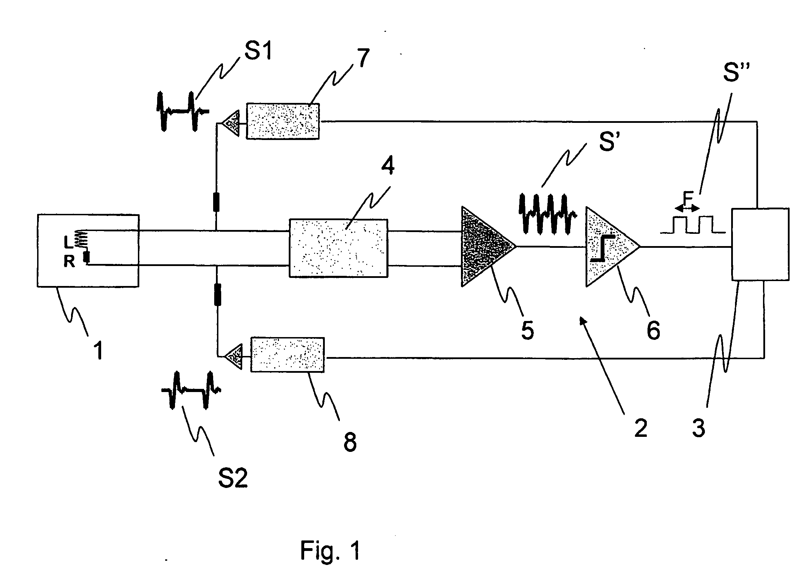

- la figure 1 représente schématiquement le circuit conforme à l'invention,
- la figure 2 est un diagramme illustrant la forme des signaux injectés,
- la figure 3 illustre schématiquement les différents états possibles du circuit de mesure, à savoir fonctionnement normal (a), défaillance due à un circuit ouvert (b), défaillance due à un court-circuit différentiel (c), défaillance due à un court-circuit à la masse (d),
- la figure 4 est une vue analogue à la figure 1 illustrant une variante de mise en oeuvre du procédé de l'invention.

Le circuit de mesure conforme à l'invention est ici décrit en association avec un dispositif de commande d'un moteur thermique d'aéronef, plus particulièrement un turboréacteur, à partir d'informations provenant de capteurs incorporés au moteur et d'instructions du pilote de l'aéronef. Le dispositif de commande actionne un organe de réglage du débit de carburant introduit dans la chambre de combustion du moteur.

Le circuit de mesure est ici destiné à permettre la mesure d'une vitesse de rotation du compresseur haute pression ou du compresseur basse pression du turboréacteur.

En référence aux figures, le circuit de mesure comprend un capteur fréquentiel 1, ici une roue phonique de type connu en lui-même, et une chaîne d'acquisition, généralement désignée en 2, reliant le capteur 1 à un calculateur numérique 3 (ou coeur numérique).

La chaîne d'acquisition 2 comprend, du capteur 1 vers le calculateur numérique 3, un organe de filtrage mode commun / mode différentiel 4, un amplificateur 5 et un organe de mise en forme 6 transformant le signal sinusoïdal d'entrée en signal TTL.

Le calculateur numérique 3 est en outre relié à deux bornes du capteur 1 par un convertisseur numérique / analogique 7, 8 pour permettre l'injection de signaux alternatifs aux bornes du capteur 1.

Le calculateur numérique 3 est agencé pour émettre, lorsque le capteur et l'organe rotatif associé sont immobiles, des signaux alternatifs S1, S2 aux bornes du capteur 1 et pour analyser des signaux en sortie du capteur 1 et plus précisément ici en sortie de l'organe de mise en forme 6.

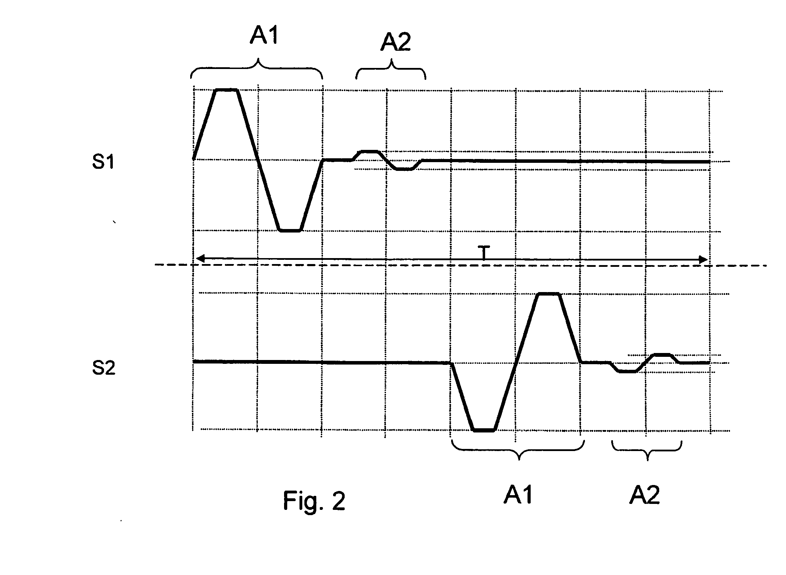

En référence plus particulièrement à la figure 2, les signaux injectés S comprennent au moins une première alternance A1 et une deuxième alternance A2, la première alternance A1 ayant une amplitude supérieure à celle de la deuxième alternance A2. Les signaux injectés S ont ici une forme sensiblement sinusoïdale. Plus précisément, un signal S1 est injecté sur le point chaud et un signal S2 est injecté sur le point froid, les signaux S1 et S2 ayant la même fréquence F0 mais étant l'opposé l'un de l'autre. Les alternances A1, A2 du signal S2 étant décalées dans le temps par rapport à celles du signal S1.

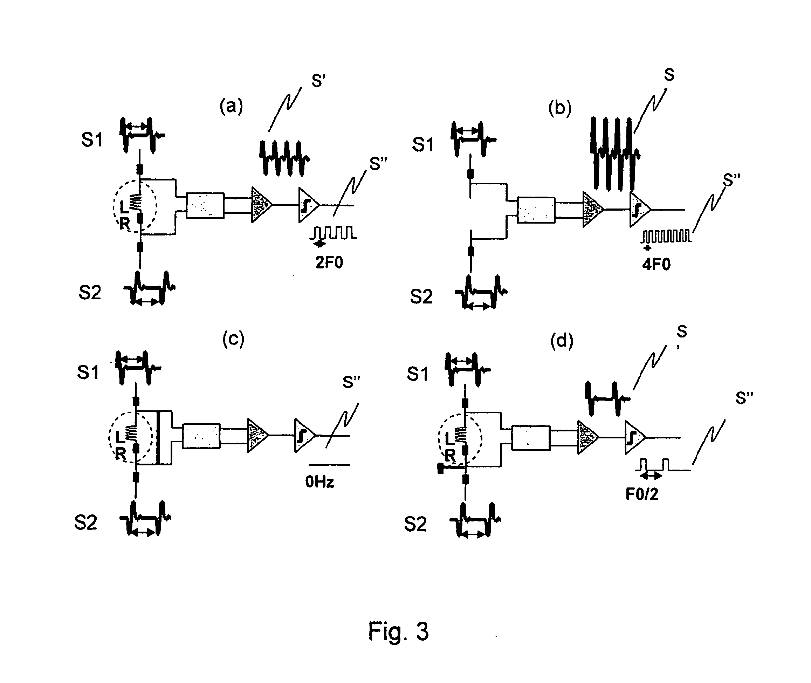

En fonctionnement normal (figure 3.a), les signaux S1 et S2 s'additionnent, les alternances A1 des signaux S1, S2 se succédant dans le signal S' en sortie de l'amplificateur tandis que les alternances A2 ne sont pas prises en compte, de sorte que le signal S' a une forme sinusoïdale avec une fréquence double de celle de chaque signal S et le signal S" en sortie de l'organe de mise en forme a une forme en créneaux de fréquence identique à celle du signal S'. Les alternances A2 ne sont pas prises en compte car elles sont atténuées par le pont diviseur créé par l'impédance du capteur et les impédances des résistances de polarisation.

En cas de circuit ouvert (figure 3.b), les alternances A2 sont prises en compte car elles ne sont pas atténuées par le capteur contrairement au cas précédent. Les signaux S1 et S2 s'additionnent, les alternances A1 et A2 des signaux S1, S2 se succédant dans le signal S' entraînant la prise en compte des alternances A1 et A2 par l'organe de mise en forme 6 de sorte que le signal S" a une fréquence égale à quatre fois celle des signaux S et S'.

En cas de court-circuit différentiel (figure 3.c), les deux bornes sont reliées et aucun signal entre ces bornes. Les signaux S' et S" ont alors une fréquence nulle.

En cas de court-circuit à la masse (figure 3.d), un seul des signaux S parvient jusqu'à l'amplificateur 4 de sorte que les signaux S' et S" ont une fréquence égale à celle des signaux S.

Le circuit est ainsi agencé pour détecter et identifier des pannes.

Bien entendu, l'invention n'est pas limitée au mode de réalisation décrit mais englobe toute variante entrant dans le champ de l'invention telle que définie par les revendications.

En particulier, le circuit conforme à l'invention peut être utilisé avec un ou plusieurs capteurs.

Bien que l'invention ait été décrite dans une application aéronautique, l'invention est applicable à la mesure au moyen de capteurs fréquentiels de tout type à des fins de régulation de moteur ou de tout autre type de commande comme par exemple un système d'anti-patinage d'un dispositif de freinage.

Le calculateur numérique peut être un calculateur numérique dédié ou un calculateur numérique assurant également une ou plusieurs autres fonctions.

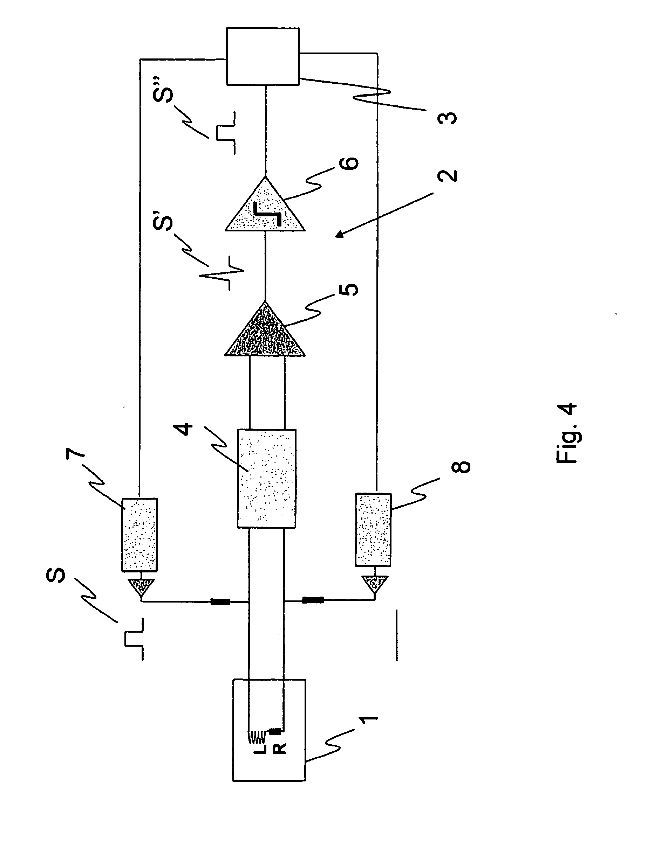

Comme représenté dans la variante de la figure 4, le procédé de détection de panne conforme à l'invention, peut comporter les étapes de, lorsque l'organe rotatif auquel est associé le capteur fréquentiel est à l'arrêt :
- injecter une impulsion S sur une première borne du capteur 1, par exemple au point chaud,
- détecter au moins une impulsion dans le signal de sortie S",
- injecter une impulsion S sur une deuxième borne du capteur 1, au point froid,
- détecter une impulsion dans le signal de sortie S".

En l'absence de court-circuit à la masse de la borne sur laquelle est injectée l'impulsion, le capteur va renvoyer, du fait de son inductance, une forte impulsion (la tension aux bornes de l'inductance dépend de la dérivée du courant injecté) qui se retrouve dans le signal S' et donc dans le signal S". L'absence de cette impulsion révèlera un court-circuit de ladite borne à la masse.

Un signal plat peut être injecté sur l'autre borne que celle sur laquelle est injectée l'impulsion.

Il est possible dans cette variante d'injecter une ou plusieurs impulsions pour obtenir un ou plusieurs créneaux dans le signal de sorte S".

Bien que dans cette variante, l'injection de l'impulsion et la détection sont effectuées successivement pour chacune des bornes, une seule borne pourrait être testée.

## Revendications

1. Procédé de détection de panne d'un capteur fréquentiel (1) qui est associé à un organe rotatif, comportant les étapes de, lorsque l'organe rotatif est à l'arrêt :
- injecter au moins une impulsion sur au moins une borne du capteur,
- détecter au moins une impulsion dans un signal de sortie (S") du capteur, ce signal de sortie (S") du capteur étant généré par le capteur en réponse à l'injection de ladite au moins une impulsion sur ladite au moins une borne du capteur ; et
- dans..lequel des impulsions sont injectées sur deux bornes du capteur sous formes de signaux alternatifs (S1, S2) opposés comportant au moins une première alternance (A1) et une deuxième alternance (A2), la première alternance ayant une amplitude supérieure à celle de la deuxième alternance, la détection portant sur une fréquence du signal de sortie (S") du capteur.

2. Procédé selon la revendication 1, dans lequel, le capteur comportant deux bornes, l'injection de l'impulsion et la détection sont effectuées successivement pour chacune des bornes.

3. Procédé selon la revendication 1, dans lequel les signaux injectés (S1, S2) sont sensiblement sinusoïdaux.

4. Circuit de mesure comportant un capteur fréquentiel (1) et une chaîne d'acquisition (2) comportant un calculateur numérique (3) agencé pour mettre en oeuvre le procédé conforme à l'une quelconque des revendications précédentes.

5. Circuit selon la revendication 4, dans lequel la chaîne d'acquisition (2) comprend, du capteur (1) vers le calculateur numérique (3), un organe de filtrage mode commun / mode différentiel (4), un amplificateur (5), et un organe de mise en forme TTL (6).

## Patentansprüche

1. Verfahren zur Erkennung eines Defekts eines Frequenzsensors (1), der mit einem Drehelement verbunden ist, wobei das Verfahren, wenn das Drehelement im Stillstand ist, die Schritte umfasst:
- Einkoppeln mindestens eines Impulses an mindestens einer Klemme des Sensors,
- Erfassen mindestens eines Impulses in einem Ausgangssignal (S") des Sensors, wobei dieses Ausgangssignal (S") des Sensors von dem Sensor in Antwort auf das Einkoppeln des genannten mindestens einen Impulses an der genannten mindestens einen Klemme des Sensors erzeugt wird,
und
- wobei Impulse an zwei Klemmen des Sensors in Form von entgegengesetzten Wechselsignalen (S 1, S2) eingekoppelt werden, die mindestens eine erste Halbwelle (A1) und eine zweite Halbwelle (A2) umfassen, wobei die erste Halbwelle eine Amplitude hat, die größer als die der zweiten Halbwelle ist, wobei sich das Erkennen auf eine Frequenz des Ausgangssignals (S") des Sensors erstreckt.

2. Verfahren nach Anspruch 1, wobei für den Fall, dass der Sensor zwei Klemmen umfasst, das Einkoppeln des Impulses und das Erfassen nacheinander für jede Klemme ausgeführt werden.

3. Verfahren nach Anspruch 1, wobei die eingekoppelten Signale (S1, S2) im Wesentlichen sinusförmig sind.

4. Messschaltung, umfassend einen Frequenzsensor (1) und eine Erfassungskette (2), die einen Digitalrechner (3) umfasst, der so ausgebildet ist, dass er das Verfahren gemäß irgendeinem der vorhergehenden Ansprüche durchführt.

5. Schaltung nach Anspruch 4, wobei die Erfassungskette (2) vom Sensor (1) aus in Richtung des Digitalrechners (3) ein Gleichtakt-/Gegentakt-Filterorgan (4), einen Verstärker (5) und ein Formungselement TTL (6) umfasst.

## Claims

1. A method of detecting a fault of a frequency sensor (1) that is associated with a rotary member, the method comprising performing the following steps while the rotary member is stationary:
· injecting at least one pulse into at least one terminal of the sensor; and
· detecting at least one pulse in an output signal (S") from the sensor, said output signal (S") from the sensor being generated by the sensor in response to said injection of said at least one pulse into at least one terminal of the sensor; and
· wherein pulses are injected into two terminals of the sensor in the form of inverted alternating signals (S1, S2) each comprising at least one first alternation (A1) and at least one second alternation (A2), the first alternation being of amplitude greater than the amplitude of the second alternation, with detection relating to a frequency of the output signal (S") from the sensor.

2. A method according to claim 1, wherein the sensor has two terminals and pulse injection and detection are performed successively on each of the terminals.

3. A method according to claim 1, wherein the injected signals (S1, S2) are substantially sinusoidal.

4. A measurement circuit comprising a frequency sensor (1) and an acquisition system (2) including a digital computer (3) arranged to implement the method according to any preceding claim.

5. A circuit according to claim 4, wherein the acquisition system (2) comprises, from the sensor (1) to the digital computer (3), a common-mode/differential-mode filter member (4), an amplifier (5), and a TTL shaper member (6).
